# EUROPEAN PATENT APPLICATION

(11) **EP 3 835 197 A1**
(43) Date of publication of application: **16.06.2021**
(21) Application number: 19383098.1
(22) Date of filing: 11.12.2019
(51) Int. Cl.: B63B 35/04, B65H 55/00, B65H 75/00, H02G 1/10

(54) **INSTALLATION OF A LINE BETWEEN TWO STRUCTURES**

(71) Applicant: Fundación Tecnalia Research & Innovation, 48160 Derio - Bizkaia (ES); BCAM Basque Center for Applied Mathematics, 48009 Bilbao (ES)
(72) Inventor: Berque, Joannes, 48160 Derio (ES); Rico Rubio, Antonio, 48160 Derio (ES); Sellner, Jan, 48160 Derio (ES); Nava, Vincenzo, 48009 Bilbao (ES); Pérez Morán, Germán, 48160 Derio (ES)
(74) Representative: Balder IP Law, S.L.

(57) **Abstract**

A method for installing a line between first and second structures, comprising: reeling the line on a drum of an apparatus such that a first segment of the line is reeled in a first reeling direction, and a second segment of the line is reeled in a reverse reeling direction, the first segment comprising a first end of the line and the second segment comprising a second end of the line; connecting the first end of the reeled line to the first structure; moving the apparatus such that it gets closer to the second structure, and unreeling part of the first segment of the reeled line while the apparatus moves; and after the step of moving the apparatus and unreeling the part of the first segment, connecting a wire from the second structure to the second end of the line; pulling, from the second structure, the wire while connected to the second end of the line and simultaneously unreeling at least part of the second segment of the reeled line; and after the step of pulling the wire and unreeling the at least part of the second segment, disconnecting the second end of the line from the wire and connecting the second end of the line to the second structure.

## Description

### TECHNICAL FIELD

The present invention relates to technical field of lines. More particularly, the present invention relates to installation of lines.

### STATE OF THE ART

The laying and connection of lines may be complex tasks, especially when carried out underwater. The installation of submarine lines is particularly complex because it requires divers and/or machines to lay out the lines and connect them to other lines or connectors of structures, tasks that must be carried out at a depth which may range from several meters to several hundreds of meters, even up to several kilometers (for example, in the open sea). At such depths, the pressure is several times greater than at the surface, and visibility is poor or non-existent, thus complicating any operation carried out underwater.

Usually, the line to be laid out is reeled on a drum from which the line is paid out for laying it out. The drum is typically arranged on a vessel, although sometimes it is arranged on a submersible apparatus such as a submersible remotely operated vehicle. By rotating the drum, the line reeled thereon is paid out.

When two structures are to be connected with a line, the installation procedure typically consists in connecting a first end of the line to one of the two structures, then laying out the line from said structure to the other one of the two structures, and finally connecting the other end of the line to said other structure. By proceeding in this manner, the line can be paid out from the drum by rotating the latter, but this is done only during part of the line laying, in particular the line cannot be completely paid out in this manner because, as opposed to the first structure, the second structure is in the direction towards which the line must go and not from which it is being laid. Or, in other words, as the second structure will be in front, rather than behind, of the vehicle or apparatus holding the line, before reaching the second structure the described process for paying out the line must be stopped and paid out in a different manner. In order to make possible to maintain the same way of paying out the line, the vehicle or apparatus would have to go beyond the second structure so that it is behind the vehicle or apparatus, but in such case connecting the line to the structure becomes very complex as the tension of the line must be maintained within an appropriate tension range so that it does not break, entangle or get damaged during the connection and laying of the last portion of the line.

The above problem is exacerbated when one or both structures are in a marine environment, i.e. is or are offshore structures, and the vehicle or apparatus is a vessel or a submersible apparatus.

When in a marine environment, in the prior art this problem is typically dealt with by paying out an additional length of the line before reaching the second structure on the surface of the vessel where the drum is arranged; this additional length is adjusted to the length necessary for both reaching the second structure and connecting the line to said structure, with the length being adjusted by cutting the line so that excess thereof is not used during the remaining part of the installation process. The line is spread on the floor of the vessel and part thereof arranged on a cable quadrant for maintaining the tension of the line within an appropriate tension range. The free end of the line is connected to a messenger wire of the second structure and then the line is progressively lowered onto the seafloor for finishing the laying of the line.

This part of the installation process is slow, cumbersome and prone to line failures if not carried out properly. Furthermore, the need for a surface vessel for a long period of time due to this part of the process restricts the installation of submarine lines to those periods in which both the weather and the sea state are favorable. When the submarine lines interconnect wind turbines of an offshore wind farm, or wave energy converters, the strength of the wind and the waves may not allow to carry out this part of the process due to the risk for human life that these conditions entail. Also, the cost of hiring the services of such vessel and the crew thereof are considerable, therefore it is desirable to reduce these as much as possible by both simplifying and speeding up the installation process. Usually, the costs of a submarine line installation process are distributed such that the installation at the first structure is approximately 30% of the total cost, the line laying and the trenching is approximately 30% of the total cost, and the installation at the second structure is approximately 40% of the total cost.

There is an interest in simplifying the installation process of a line between two structures, particularly simplifying the installation at the second structure, preferably when the line is a submarine line and one or both structures are offshore structures.

### DESCRIPTION OF THE INVENTION

A first aspect of the invention relates to a method for installing a line between first and second structures (e.g. first and second wind turbines), comprising:
reeling the line on a drum of an apparatus (e.g. a remotely operated vehicle, i.e. ROV, as known in the art) such that a first segment of the line is reeled in a first reeling direction, and a second segment of the line is reeled in a reverse reeling direction (that is to say, in a second reeling direction opposite to the first reeling direction), the first segment comprising a first end of the line and the second segment comprising a second end of the line;
connecting the first end of the reeled line to the first structure;
moving the apparatus such that it gets closer to the second structure (i.e. the distance between the apparatus and the second structure is reduced, which may occur even if the apparatus is not advancing -directly- towards the second structure), and unreeling part of the first segment of the reeled line while the apparatus moves; and
after the step of moving the apparatus and unreeling the part of the first segment, connecting a wire (e.g. a messenger wire as known in the art) from the second structure to the second end of the line;
pulling, from the second structure, the wire while connected to the second end of the line and simultaneously unreeling at least part of the second segment (i.e. some extension or the complete extension of the second segment) of the reeled line; and
after the step of pulling the wire and unreeling the at least part of the second segment, disconnecting the second end of the line from the wire and connecting the second end of the line to the second structure.

The line is reeled on the drum such that it can be unreeled from both ends yet the drum is rotated in a single direction for unreeling the line while reeled thereon. The line can be partially or completely -i.e. some or all length- unreeled in one go of the apparatus in which the apparatus moves from a first position, which is preferably proximate to or at the first structure, to a second position, which is preferably proximate to or at the second structure. In this respect, the apparatus operates in a similar or same manner as in prior art line installation procedures where the apparatus pays out the line between the two structures to be connected, however in the method of the present disclosure the line can be unreeled from both ends or selectively from one end or the other during the motion of the apparatus, and also prior to and/or after said motion has been effected.

As the line is unreeled from both ends, selectively and either simultaneously or not, it is not necessary to unreel the whole line before performing the connection of the line to both the first structure and the second structure. For instance, while the line is reeled on the drum, part or the totality of the first segment is unreeled for effecting the connection to the first structure, then part of the extension of the line, be it from the first segment and/or from the second segment, is further unreeled so as to pay it out between the first and second structures, and then part or the totality of the second segment is either connected to the second structure while there is still some line reeled on the drum -from the first and/or the second segments-, or the line is unreeled at some position between the first and second structures for effecting the connection to the second structure afterwards. The first segment of the line or the second segment of the line or both segments can be kept reeled on the drum owing to mechanical or electrical one or more clamps comprised in the drum adapted for holding the segments of the line reeled thereon, and said one or more clamps being operable (preferably, remotely) by personnel so as to allow the unreeling of part of the line. Also, the drum may be provided with one or more tensioners that maintain the tension of the line while reeled on the drum and thereby keeping the line reeled thereon.

The connection of the line to each structure is usually carried out with the aid of messenger wires. For instance, when the structures are wind turbines, they each have a tower -that is typically tens of meters long, and whose length may even exceed a hundred meters-that the line must partially or completely cover in length so as to reach the connecting point of the wind turbines (when the wind turbines are offshore wind turbines, the connecting point is above the water surface); a messenger wire usually goes from the location of the connecting point down to an opening in the wind turbine (when the wind turbines are offshore wind turbines, the opening is normally underwater and located in the wind turbine foundation) so that the line can be pulled in through the opening and up to said location. Accordingly, the messenger wire has the first end thereof at or near to said location and goes through the tower or foundation so that the second end of the messenger wire exits the wind turbine through said opening. The second end of the messenger wire is connected with or attached to the end of the line and, subsequently, the messenger wire is pulled from the wind turbine so as to introduce the second end of the messenger wire into the wind turbine together with the end of the line; in some cases, the drum is rotated while the messenger wire is pulled so as to unreel the line, whereas in some other cases pulling the messenger wire causes the rotation of the drum thereby unreeling the line. Once the end of the line reaches a convenient location in the wind turbine, the same is connected to the connecting point for installing said line to the wind turbine.

In this document, the term 'proximate to' refers to a distance between two points that is short in length, for example less than 200 meters, preferably less than 150 m, 100 m, 50 m and/or 10 m.

In some embodiments, the drum comprises means for making the line reelable in both the first and the reverse reeling directions.

In some embodiments, the means for making the line reelable in both the first and the reverse reeling directions comprise a mechanical device adapted to hold the line such that a reversal, e.g. a U turn formed by the line in a segment thereof between the first and second segments, of the line is supported on the mechanical device.

In some embodiments, the means for making the line reelable in both the first and the reverse reeling directions comprise one or more groups of rolling devices adapted to allow sliding of the line through said means, and preferably adapted to allow smooth sliding of the line.

The reversal, which is part-way of the extension of the line, provides a change in the reeling direction of the line as reeled on the drum. This change in reeling direction results in the first segment of the line being reeled left-lay and the second segment of the line being reeled right-lay, or right-lay and left-lay respectively, thereby making the line unreelable from both ends thereof by rotating the drum in a single direction.

The mechanical device holds and supports a reversal of the line. The line is reeled on the drum in both reeling directions, i.e. left-lay and right-lay, from said mechanical device, which assists in maintaining the line reeled on the drum in both reeling directions without losing tension and/or in easing the reeling of the line on the drum. The line thus partially surrounds the mechanical device, and each of the two segments extending from the mechanical device are reeled on the drum.

By way of example, the mechanical device is a protruding element arranged on a portion of a cylindrical surface of the drum. The mechanical device may be integrally formed on the cylindrical surface of the drum or be a separate device or element that is mechanically attached to the cylindrical surface of the drum. In some examples, the protruding element is a hook.

In some embodiments, the drum comprises a first cylindrical body and an annular body, the annular body being adapted to rotate around the cylindrical body; the drum further comprises means for rotating the mechanical device about a same rotation axis of the first cylindrical body; and at least part of the first segment is reeled on the first cylindrical body and at least part of the second segment is reeled on the annular body. In some of these embodiments, when the mechanical device is arranged circumscribing the first cylindrical body or part thereof, the mechanical device rotates around the first cylindrical body, thus also rotating about said rotation axis.

The means for rotating the mechanical device may be, for instance, a hydraulic motor or an electric motor, and owing to said means the mechanical device may rotate around the first cylindrical body when the cylindrical body is not rotated, and/or even it may rotate around said body at a rotating speed different from a rotating speed of the first cylindrical body (including the possibility of the mechanical device rotating in an opposite direction with respect to the rotating direction of the first cylindrical body), so both the first cylindrical body and the mechanical device may rotate at the same time but at different rotating speeds and/or in different rotating directions, and also at same rotating speeds.

Alternatively, the mechanical device may be arranged next to the first cylindrical body such that it is provided with the same rotating axis as the first cylindrical body (i.e. they both rotate about the same rotating axis). In this case, the mechanical device is rotatable owing to the means for rotating and may rotate at same or different speeds relative to the rotation of the first cylindrical body.

In both cases, the rotation of the first cylindrical body and the rotation of the mechanical device are independent.

The reversal of the line is moveable along the extension of the line by rotating the mechanical device in relation to the first cylindrical body.

In some embodiments, the drum comprises a first cylindrical body and a second cylindrical body adapted to rotate about a rotation axis of the first cylindrical body; the drum further comprises means for rotating the mechanical device about the rotation axis (the same of the first and second cylindrical bodies); and at least part of the first segment is reeled on the first cylindrical body and at least part of the second segment is reeled on the second cylindrical body. In some of these embodiments, when the mechanical device is arranged circumscribing the first cylindrical body or part thereof, the mechanical device rotates around the first cylindrical body, thus also rotating about said rotation axis.

Instead of the annular body, in these embodiments the drum is provided with two cylindrical bodies that are rotatable about the same rotating axis such that each one may rotate independently of the other.

In some embodiments, the step of pulling the wire and unreeling the at least part of the second segment comprises: pulling, from the second structure, the wire while connected to the second end of the line so as to rotate the annular body or the second cylindrical body thereby unreeling the at least part of the second segment of the reeled line, and simultaneously rotating the mechanical device around the first cylindrical body for transferring part of the first segment reeled on the first cylindrical body to the annular body or the second cylindrical body for unreeling thereof through the second end.

Thanks to the movement of the reversal along the extension of the line, part of one of the segments of the line may be transferred to the other segment of the line, thereby reducing the length of the first segment and increasing the length of the second segment, or vice versa. This, in turn, makes possible to adjust the length of each segment to be unreeled from the corresponding end. But more importantly, the rotation of both the mechanical device and either the annular body or the second cylindrical body, which does not have to be at the same rotating speed nor in the same rotating direction, makes possible to pay out the line without losing the tension thereof.

The mechanical device is rotated such that part of the first segment is transferred to the second segment. In this case, transferring the first segment to the second segment results in providing additional length of line on either the annular body or the second cylindrical body. Accordingly, by pulling the wire of the second structure, more length of the second segment may be unreeled from the drum so as to pay out the line through the side of the second end. In preferred embodiments, the part of the first segment reeled on the first cylindrical body is completely transferred to either the annular body or the second cylindrical body so that it becomes reeled thereon (as the second segment). Then, pulling the wire results in the complete unreeling of the line on the drum through the side of the second end, thus the apparatus is not moved while unreeling the second segment of the line.

In some embodiments, the mechanical device is: a cable quadrant, or a cable protection device or system for limiting a bending radius of the line.

In some embodiments, the step of reeling the line on the drum comprises reeling the line on the drum such that a reversal in the reeled line is provided between the first and second segments. In some of these embodiments, the reversal in the reeled line is supported on the mechanical device.

In some embodiments, the means for making the line reelable in both the first and the reverse reeling directions comprise a cable protection device or system for limiting a bending radius of the line.

Ensuring that the line is not damaged owing to the provision of the reversal is in this case possible by means of the cable protection device or system. The cable protection device or system may be any one known in the art that limits how much the line to be protected bends. Accordingly, the line cannot be bent beyond a minimum bending radius enforced by the device or system.

In some embodiments, the drum comprises a first cylindrical body with a first diameter, and a second cylindrical body with a second diameter, the second diameter being greater than the first diameter. In these embodiments, the first segment is reeled on the first cylindrical body, and the second segment is reeled on the second cylindrical body.

The provision of two different diameters and arrangement of the two segments of the line on the first and second bodies causes the unreeling of a segment at a greater rate than the unreeling of the other segment for a same drum rotation. In particular, the second segment of the line unreels at a greater rate than the first segment owing to the greater diameter of the cylindrical body.

Since the line is paid out from the first structure to the second structure such that the first end of the line is to connect with the first structure and the second end is to connect with the second structure, the paying out by the apparatus is carried out by rotating the drum as in prior art procedures. The second segment of the line is to be unreeled for connection to the second structure and, in this situation, the line is suspended between the apparatus and the second structure, which is preferably to be avoided, thus providing the line at a greater rate reduces this situation.

In some embodiments, the step of pulling the wire and unreeling the at least part of the second segment comprises: pulling, from the second structure, the wire while connected to the second end of the line, simultaneously unreeling both the at least part of the second segment of the reeled line and at least part of the first segment of the reeled line, and simultaneously moving the apparatus such that it gets closer to the second structure.

This way of paying out the second segment takes place when the drum of the apparatus does not include an annular body that can rotate freely with respect to the body of the drum, e.g. the cylindrical body thereof. By moving the apparatus, unreeling at least part of the first and second segments and pulling the wire at the same time, the line can be installed in the second structure. All these simultaneous steps must be performed with synchronism so that the paying out is effected in such a way that the line does not lose tension due to differences between the speed at which the wire is pulled, the speed at which the each segment or part thereof is unreeled, and the speed at which the apparatus moves.

In some embodiments, the mechanical device comprises a braking device or system which secures said mechanical device to the first cylindrical body and/or the annular body or the second cylindrical body.

This braking device or system assists in avoiding non-desirables movements and/or in attaining synchronization during installation of the line.

In some embodiments, the annular body or the second cylindrical body comprises a braking device or system which secures said annular body or second cylindrical body to the first cylindrical body and/or mechanical device, thereby assisting in avoiding non-desirables movements and/or in attaining synchronization.

In some embodiments, the annular body or the second cylindrical body comprises one or more electrical or hydraulic motors.

Said motor or motors assist in or make possible the synchronization during the unreeling process.

In some embodiments, the line comprises a length greater than a distance between the first and second structures and less than or equal to 1,5 times the distance, and preferably less than or equal to 1,2 times the distance.

In some embodiments, the line comprises at least one of: a conduit for transporting energy, a conduit for transmitting a liquid material, and a line for transmitting data.

The line may include one or more conduits or conductors for transporting energy (for example, electrical energy, hydraulic energy, pneumatic energy), a conduit or a plurality of conduits for transmitting or transporting liquid materials such as, for example, lubricant oil, coolant, fuel, liquefied gas, liquefied concrete (prior to the setting thereof, and transported together with compressed air which facilitates the movement thereof through the conduit), sand (in a mixture of sand and water that allows for movement through the conduit), etc.

In some embodiments, at least one of the first structure and the second structure is an offshore structure, and the line is a submarine line. In some of these embodiments, both the first structure and the second structure are offshore structures, e.g. offshore wind turbines.

In some embodiments, the line is a submarine line.

In some embodiments, the apparatus is a submersible apparatus.

In some embodiments, the apparatus is a vessel.

In some embodiments, the method further comprises holding and/or moving a portion of the unreeled line with the apparatus before lowering the line and putting it on a ground.

To this end, the apparatus comprises means for manipulating at least one of: the line to be installed, and obstacles in the moving path of the apparatus (such as rocks or plants).

Said means comprise an arm with a first end secured to the apparatus, and a second end which is provided with a ring, grab, jaws, pliers, or another tool that makes possible line manipulation; the tool in said second end may also make possible to manipulate obstacles that may interfere with the movements of the apparatus during the line installation. The means may hold the line such that the apparatus moves outside of the way of the line upon finishing the installation thereof. This means that, when the installation is about to finish, the apparatus could potentially prevent the line from being completely laid on the ground due to the presence of the apparatus, thus the means may hold the line while the apparatus moves (for instance sideways), thereby freeing space for the line, at which point the assembly lowers the portion of the line held and puts it on the ground.

In some of these embodiments, the means for manipulating may connect an end of the line to an end of a messenger wire.

In this way, personnel or another ROV is not necessary for performing the connection.

In some embodiments, the step of moving the apparatus such that it gets closer to the second structure further comprises digging a trench, and the step of unreeling the part of the first segment of the reeled line further comprises introducing the part of the first segment of the reeled line in the trench dug.

To this end, the apparatus further comprises means for digging a trench, e.g. a dredge, a V-shaped plowing device, a waterjet cutting tool as a jet trencher, and other tools commonly used in the field of installing lines.

A second aspect of the invention relates to a drum adapted for attachment to an apparatus and further adapted for reeling a line thereon such that a first segment of the line is reeled or reelable in a first reeling direction, and a second segment of the line is reeled or reelable in a reverse reeling direction, the first segment comprising a first end of the line and the second segment comprising a second end of the line.

The drum is attachable to an apparatus (including, but not limited to, a submersible apparatus) for laying out lines (including, but not limited to, submarine lines) and it makes possible to pay out the line reeled on the drum, with a rotation of the drum in a single direction, when the apparatus is installing the line between two structures. The way in which the line is to be reeled on the drum is such that laying out the same is straightforward even when the structure to be reached -from the structure in which the line has been already installed- is in the front half-plane of the apparatus, thus it is neither necessary to overshoot said structure - i.e. it is not necessary that the apparatus moves beyond said structure so that the latter is in the rear half-plane of the apparatus- nor necessary to first spread the line on the floor of a vessel for subsequent lowering of the portion of the line when about to reach said structure.

In some embodiments, the drum comprises means for making the line reelable in both the first and the reverse reeling directions.

In some embodiments, the means for making the line reelable in both the first and the reverse reeling directions comprise one or more groups of rolling devices adapted to allow sliding of the line through said means, and preferably adapted to allow smooth sliding of the line.

In some embodiments, the means for making the line reelable in both the first and the reverse reeling directions comprise a mechanical device adapted to hold the line such that a reversal of the line is supported on the mechanical device.

In some of these embodiments, the mechanical device is: a cable quadrant, or a cable protection device or system for limiting a bending radius of the line.

In some embodiments, the drum is adapted for reeling the line thereon such that a reversal in the reeled line is provided between the first and second segments.

In some embodiments, the drum further comprises: a first cylindrical body and an annular body around the first cylindrical body, the annular body being adapted to rotate around the first cylindrical body; and means for rotating the mechanical device about a same rotation axis of the first cylindrical body. Further, in these embodiments, at least part of the first segment is reeled or reelable on the cylindrical body and at least part of the second segment is reeled or reelable on the annular body. In some of these embodiments, when the mechanical device is arranged circumscribing the first cylindrical body or part thereof, the mechanical device rotates around the first cylindrical body, thus also rotating about said rotation axis.

In some embodiments, the drum further comprises a first cylindrical body and a second cylindrical body adapted to rotate about a rotation axis of the first cylindrical body; the drum further comprises means for rotating the mechanical device about the rotation axis (the same of the first and second cylindrical bodies); and at least part of the first segment is reeled or reelable on the first cylindrical body and at least part of the second segment is reeled or reelable on the second cylindrical body. In some of these embodiments, when the mechanical device is arranged circumscribing the first cylindrical body or part thereof, the mechanical device rotates around the first cylindrical body, thus also rotating about said rotation axis.

In some embodiments, the drum comprises a first cylindrical body with a first diameter, and a second cylindrical body with a second diameter, the second diameter being greater than the first diameter. In these embodiments, the first segment is reeled or reelable on the first cylindrical body, and the second segment is reeled or reelable on the second cylindrical body.

In some embodiments, the mechanical device comprises a braking device or system which secures said mechanical device to the first cylindrical body and/or the annular body or the second cylindrical body.

In some embodiments, the annular body or the second cylindrical body comprises a braking device or system which secures said annular body or second cylindrical body to the first cylindrical body and/or mechanical device, thereby assisting in avoiding non-desirables movements and/or in attaining synchronization.

In some embodiments, the annular body or the second cylindrical body comprises one or more electrical or hydraulic motors.

In some embodiments, the drum further comprises the line. In some of these embodiments, the line comprises at least one of: a conduit for transporting energy, a conduit for transmitting a liquid material, and a line for transmitting data. In some of these embodiments, the line is a submarine line.

A third aspect of the invention relates to an apparatus comprising:
moving means (for movement of the apparatus), e.g. a plurality of track chains;
a drum according to the second aspect of the invention; and
a line reeled on the drum such that a first segment of the line is reeled in a first reeling direction, and a second segment of the line is reeled in a reverse reeling direction, the first segment comprising a first end of the line and the second segment comprising a second end of the line; and
the apparatus being configured to unreel the line from both ends.

The apparatus is capable of installing the line between first and second structures, e.g. first and second wind turbines, by, at least in part, unreeling the line from the first and second ends.

To this end, the apparatus is configured to control the moving means and the drum. The apparatus may lay the line between the first and second structure as it moves from a location proximate to the first structure to a location proximate to the second structure. By controlling the drum, e.g. the rotation thereof, the apparatus selectively unreels the line from the first end, from the second end, or from both ends at the same time, namely, the first portion is partially or completely unreeled, the second portion is partially or completely unreeled, or both the first and second portions are partially or completely unreeled. The selective unreeling is at least preferably carried out while the apparatus moves for paying out the line, but in some occasions, it is also unreeled while the apparatus is not moving, e.g. prior to the motion for paying out the line, after the motion for paying out the line.

In some embodiments, the apparatus is configured to unreel the line from both ends by rotating the drum in a single direction.

In some embodiments, the apparatus further comprises the line. In some of these embodiments, the line comprises at least one of: a conduit for transporting energy, a conduit for transmitting a liquid material, and a line for transmitting data.

In some embodiments, the apparatus further comprises means for digging a trench.

The apparatus may lay the line in a trench that is either dug by the apparatus itself, or dug with other means. Concerning the former, the apparatus digs the trench as it moves.

In some embodiments, the apparatus comprises means for manipulating at least one of: the line to be installed, and obstacles in the moving path of the apparatus (such as rocks or plants). In some of these embodiments, the means for manipulating may connect an end of the line to an end of a messenger wire.

In some embodiments, the line is a submarine line.

In some embodiments, the apparatus is a vessel.

In some embodiments, the apparatus is a submersible apparatus, e.g. a submersible remotely operated vehicle (ROV) as known in the art.

Similar advantages as those described for the first aspect of the invention also apply to the second and third aspects of the invention.

### BRIEF DESCRIPTION OF THE DRAWINGS

To complete the description and in order to provide for a better understanding of the invention, a set of drawings is provided. Said drawings form an integral part of the description and illustrate embodiments of the invention, which should not be interpreted as restricting the scope of the invention, but just as examples of how the invention can be carried out. The drawings comprise the following figures:
Figures 1A-1B and 2 show drums in accordance with embodiments.
Figures 3-5 show apparatuses in accordance with embodiments.
Figures 6A-6E show an installation procedure in accordance with an embodiment.
Figures 7A-7B and 8 show drums in accordance with embodiments.
Figure 9 shows an apparatus in accordance with an embodiment.
Figures 10A-10H show an installation procedure in accordance with an embodiment.

### DESCRIPTION OF WAYS OF CARRYING OUT THE INVENTION

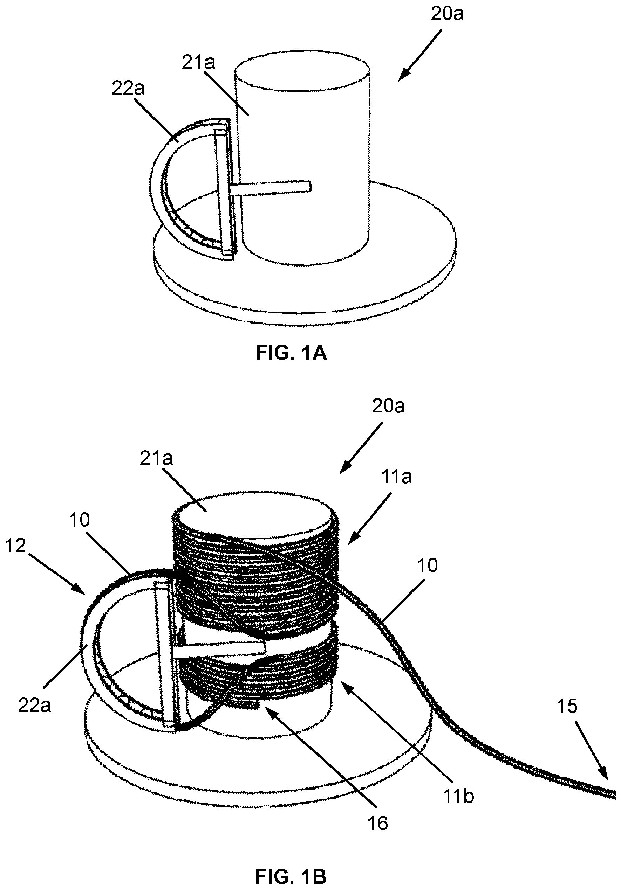

Figures 1A-1B show a drum 20a in accordance with an embodiment.

The drum 20a comprises a cylindrical body 21a on which a line 10 is reelable as illustrated in Figure 1B. The drum 20a comprises means 22a for making the line 10 reelable in such a way that a first segment 11a of the line 10 is reeled in a first reeling direction, and a second segment 11b of the line 10 is reeled in a reverse reeling direction. The first and second segments 11a, 11b each comprises one end 15, 16 of the line 10.

A majority of the length of the line 10 is reeled on the cylindrical body 21a such that it has the two reeling directions, and some length of the line 10 is reeled on the means 22a such that a reversal 12 between the first and second segments 11a, 11b is provided. The reversal 12 is, for example, a C- or U-shaped turn of the line 10.

The means 22a in this case are a cable quadrant in the form of a semicircle attached to the cylindrical body 21a, but it could be integrally formed with the cylindrical body 21a as well. The first segment 11a of the line 10 is reeled in the first direction and then it goes around the cable quadrant, thereby forming the reversal 12, so that the second segment 11b of the line 10 is reeled in the second direction. The two segments 11a, 11b are preferably spaced apart along the surface of the cylindrical body 21 a (in the example of Figure 1B they are spaced apart in a vertical direction), in this way each segment can be paid out in a straightforward manner by rotating the drum 20a in a single direction.

In some embodiments, such as in this embodiment, the means 22a are adapted for receiving the line 10 such that it bends without damaging it while ensuring that the line 10 has an appropriate tension, i.e. the tension of the line 10 on the means 22a -the cable quadrant-is within a tension range appropriate for the line 10.

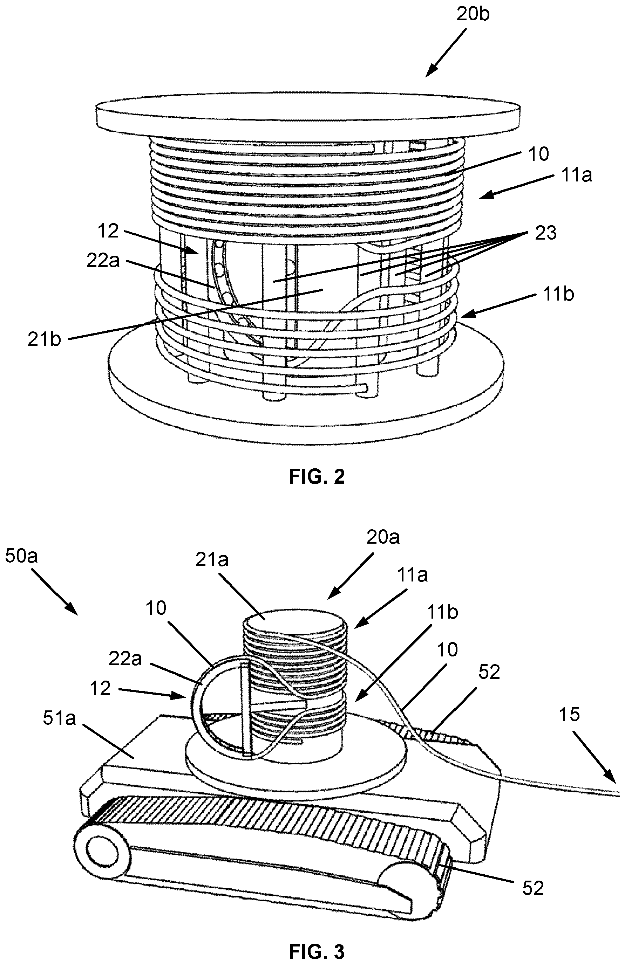

Figure 2 shows a drum 20b in accordance with an embodiment.

The drum 20b comprises a body with a first cylindrical member 21b and a plurality of second cylindrical members 23 around the first cylindrical member 21b, which in this example is at the center from the plurality of second cylindrical members. The line 10 is reeled on the plurality of second cylindrical members 23 such that the first segment 11a is reeled in a first reeling direction and the second segment 11b is reeled in a second reeling direction. The means 22a provide the reversal 12 between the first and second segments 11a, 11b.

The means 22a, which in this embodiment are also the cable quadrant, are attached to the first cylindrical member 21b and do not protrude beyond the second plurality of cylindrical members 23, in this way the reversal 12 is, to an extent, protected by the second plurality of cylindrical members 23 and the line reeled thereon so that said reversal 12 is not undone accidentally while paying out the line 10. The segment between the first and second segments 11a, 11b goes from the outside-most part of the drum 20b, that is to say, from the second plurality of cylindrical members 23, to the inside-most part of the drum 20b where the line 10 can be allocated, that is to say, to the first cylindrical member 21b, and to the outside-most part of the drum 20b once again, so that the reversal 12 is provided in that inside-most part of the drum 20b.

Figure 3 shows an apparatus 50a in accordance with an embodiment.

The apparatus 50a comprises a body 51a on top of which a drum 20a as described with reference to Figures 1A-1B is secured. To this end, the body 51a and/or the drum 20a may be provided with attaching means known in the art, for instance part of the geometry of both the body 51a and the drum 20a may be complementary for positive coupling, and/or include a plurality of screws (in the embodiments in which the apparatus is a submersible apparatus, such screws must be suitable for submarine environments), etc. In this example, the drum 20a is secured to the apparatus 50a such that the rotation axis extends in a vertical direction, but in other examples the rotation axis may extend in other directions as well.

The apparatus 50a is provided with means 52 for moving the apparatus 50a, in this case two chain tracks, but a different number of chain tracks may be provided as well. Other suitable means 52 may be additionally or alternatively provided, for example a water propulsion system.

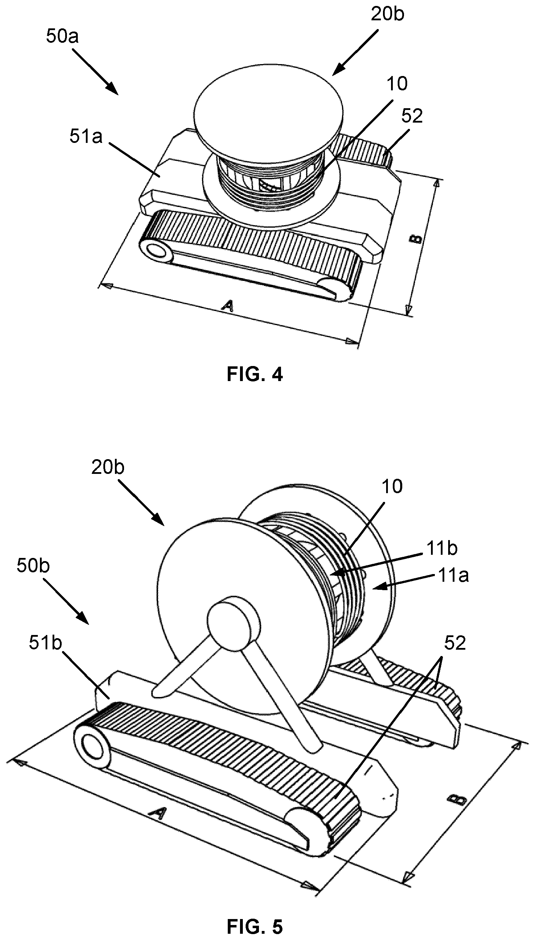

Figure 4 shows the apparatus 50a in accordance with an embodiment.

The apparatus 50a has a drum 20b as described with reference to Figure 2 attached thereon similarly as described with reference to the embodiment of Figure 3. The drum 20b is also secured to the body 51a such that the rotation axis is vertical.

As illustrated in this figure, the apparatus 50a features A and B dimensions that are perpendicular one to the other. The A dimension corresponds to the dimension parallel to the movement of the apparatus 50a, which typically -but not necessarily- is the lengthwise dimension of the apparatus 50a, and the B dimension corresponds to the transversal direction, in this case B being the width of the apparatus 50a.

Figure 5 shows an apparatus 50b in accordance with an embodiment.

The apparatus 50b comprises a body 51b adapted to secure a drum 20b, such as that of Figure 2, in a way that the rotation axis thereof is horizontal. The apparatus 50b also comprises means 52 for moving thereof.

As aforementioned, the A and B dimensions of the apparatus 50b may correspond to the lengthwise and widthwise dimensions of the apparatus 50b, respectively, but vice versa is possible as well.

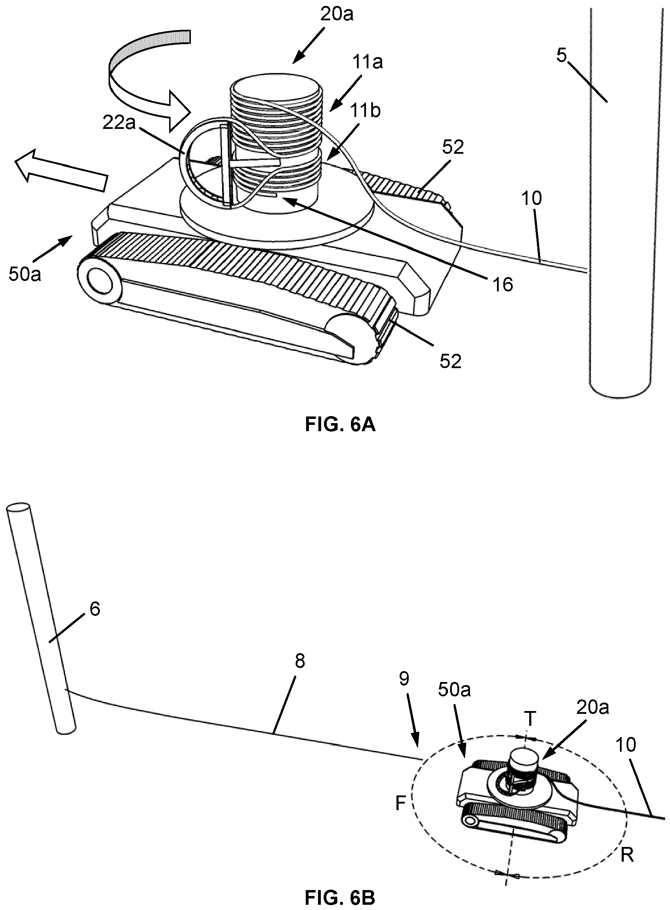

Figures 6A-6E show an installation procedure in accordance with an embodiment.

The installation procedure is carried out by means of the apparatus 50a, which lays the line 10 when installing it between two structures.

In Figure 6A, a first end 15 of the line 10 is has been already connected to a first structure 5, whereas a second end 16 of the line 10 is still to be connected to a second structure 6. Represented with arrows are both an advancing direction of the apparatus 50a when it is to lay out the line 10, and a rotation direction of the drum 20a for paying out the line 10. For installation of the line 10 in the first structure 5, a messenger wire is preferably provided from the first structure 5 so that free end thereof can be connected to the first end of the line 10; then, part of the first segment 11a is unreeled as the messenger wire is pulled from the first structure 5. When the end of the line 10 is within the first structure, it can be disconnected from the messenger wire and, then, it is connected to the first structure for completing installation thereof.

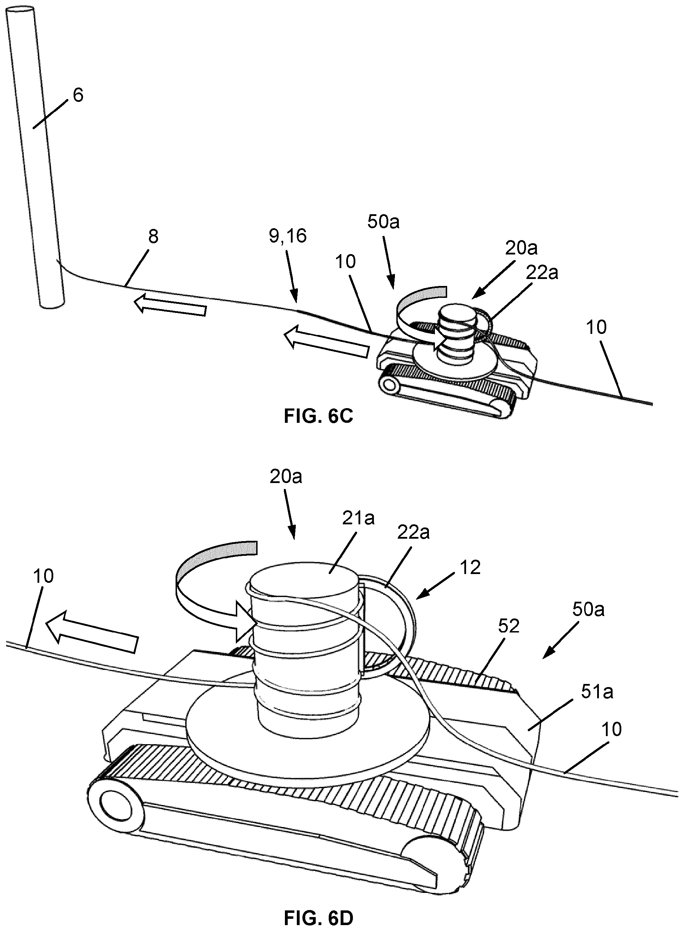

In Figure 6B, the apparatus 50a is about to reach the second structure 6 while the apparatus 50a has been laying the line 10 in the rear half-plane R, which is equivalent to the rearmost 180° angular range from the transversal axis T, and which is opposite to the front half-plane F or the frontmost 180° angular range from the transversal axis T. In particular, the apparatus 50a is proximate -e.g. at a distance less than any one of 10 m, 5 m and 1 m- to the end 9 of a messenger wire 8 (which exits the second structure 6 through an opening thereof) of the second structure 6 and said end 9 is in the front half-plane F of the apparatus 50a, thereby simplifying connection of the messenger wire 8 to the second end 9 of the cable (the line 10 is then connected as illustrated in Figure 6C). When the second structure 6 is an offshore wind turbine, the apparatus 50a preferably gets as close as possible to the scour area of the wind turbine, and the messenger wire 8 exits said offshore wind turbine through an opening in the tower or foundation of the wind turbine. The wind turbine foundation may be a bottom-fixed foundation or even a floating foundation. In this text, the term wind turbine refers to the general set, being a turbine installed on any of these foundations or even directly supported on the ground, in the onshore case).

As shown with the arrows in Figures 6C and 6D, the installation continues in the following manner:
- the drum 20a is rotated in the same direction as before, thereby paying out both at least part of the second segment 11b of the line 10 and at least part of the first segment 11a of the line 10;
- the messenger wire 8 is pulled from the second structure 6 thereby pulling the part of the second segment 11b that has been unreeled; and
- the apparatus 50a moves, preferably towards the second structure 6, so that the at least part of the first segment 11a that is being unreeled does not lose tension and is put on the ground;
all these steps are carried out simultaneously and with synchronism so that the line 10 is laid without losing tension in any one of the two segments 11a, 11b of the line 10 being unreeled, and the second end 16 may reach the second structure 6. Therefore, the messenger wire 8 needs to be pulled in accordance with both the speed (or speeds in those embodiments in which the drum allows to unreel line of the two segments 11a, 11b at different speeds) at which the two segments 11a, 11b are unreeled and the speed at which the apparatus 50a moves so that the line 10 does not lose tension.

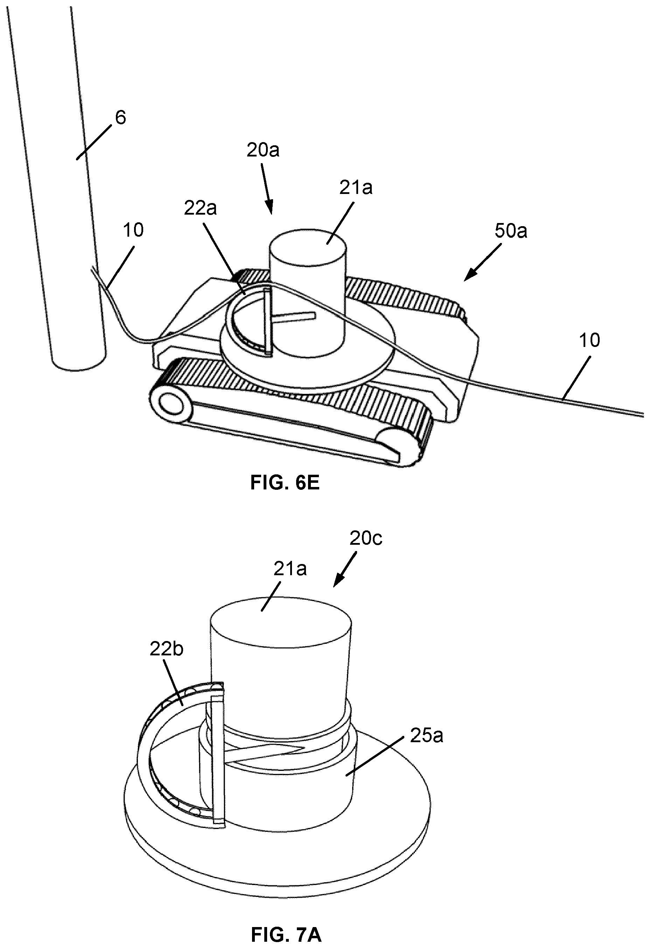

The line 10 is laid in the vicinity of the second structure 6 as illustrated in Figure 6E until all the messenger wire 8 is introduced again in the structure 6. Also, some length of the line 10 is introduced in the structure owing to the connection to the messenger wire 8 so that the line 10 is finally installed in the second structure 6. Preferably, said length of the line 10 belonging to the second segment 11b is between two and three times a height of the second structure 6; this additional length allows to compensate for inaccuracies in the installation process, and once the installation is about to be completed, the additional length not necessary is removed by cutting the corresponding portion of the line 10.

For correctly installing the portion of the line 10 that is shown suspended in the air in Figure 6E, the apparatus 50a preferably includes means for manipulating the line 10, such as a robotic arm. The robotic arm allows to pick up that portion of the line 10 and hold it while the apparatus 50a gets out of the way of the line 10, then the means lower the line 10 and put it on the ground.

Afterwards, the apparatus 50a completely pays out the line 10 so that the drum has no line 10 reeled thereon, at which point the apparatus 50a can be picked up or it goes to a different location for installing a different line.

Since the second segment 11b of the line 10 corresponds to the segment that is to be paid out when an apparatus is proximate to the second structure 6, usually the second segment 11b is shorter than the first segment 11a, and the first segment 11a is laid out while the apparatus goes from the first structure to the second structure; the distance that the apparatus moves may be several hundreds of meters or even one or few kilometers, e.g. 2 km, 3 km, etc. Accordingly, as it is apparent from Figures 1B, 2-5 and 6A, the length of the line 10 corresponding to the second segment 11b is shorter than the length of the line 10 corresponding to the first segment 11a, and thus fewer turns are provided on the drum 20a, 20b for the second segment 11b than for the first segment 11a.

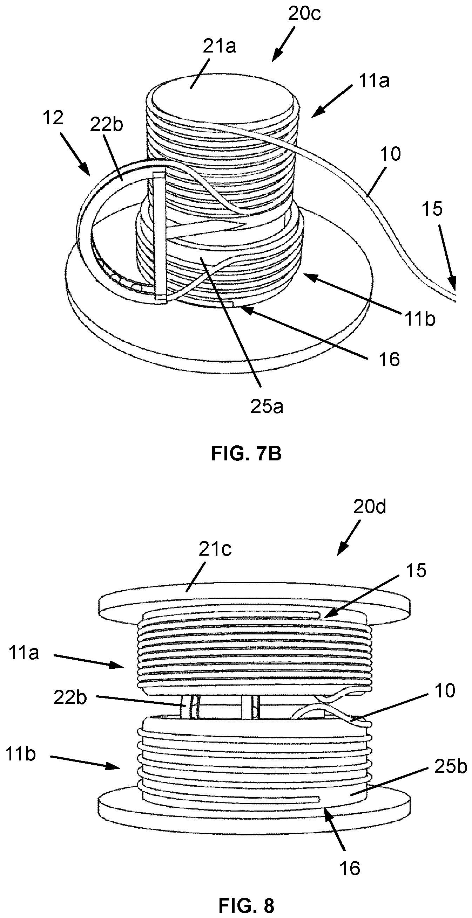

Figures 7A-7B show a drum 20c in accordance with an embodiment.

The drum 20c comprises a first cylindrical body 21a and an annular body or ring 25a adapted to freely rotate (i.e. rotate independently from the first cylindrical body 21a) around the first cylindrical body 21a arranged thereon that causes the drum 20c to have two diameters: a first diameter corresponding to the diameter of the first cylindrical body 21a and a second diameter corresponding to the diameter of the ring 25a. A cylindrical body such as the cylindrical body 21b of Figure 2 could be used as first cylindrical body instead of the first cylindrical body 21a illustrated.

In some other embodiments, for example the embodiment of Figure 8, instead of the annular body or ring 25a, a drum comprises a second cylindrical body 25b that rotates about the same rotating axis of the first cylindrical body 21a but independently from it, i.e. the first and second cylindrical bodies 21c, 25b rotate about the same rotating axis but can rotate at different speeds and/or directions one with respect to the other.

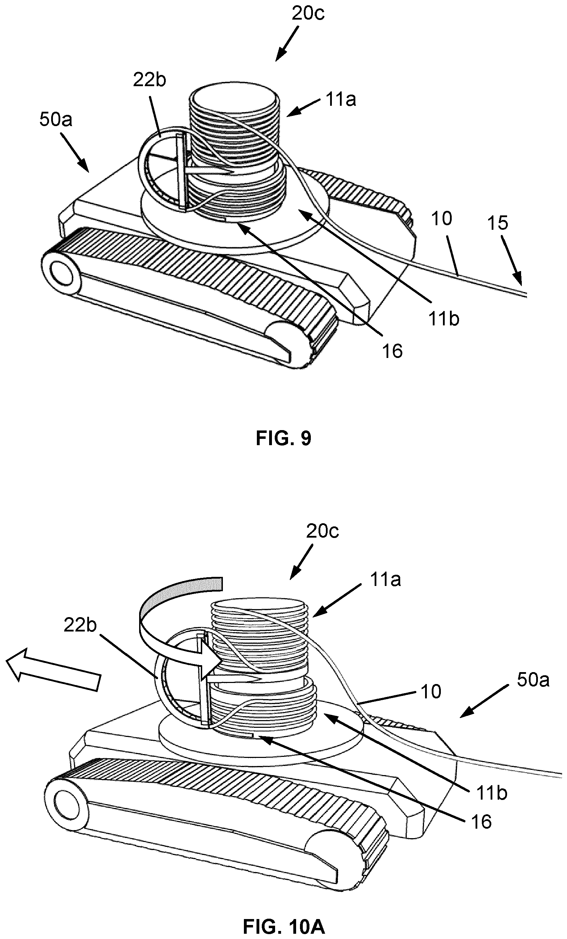

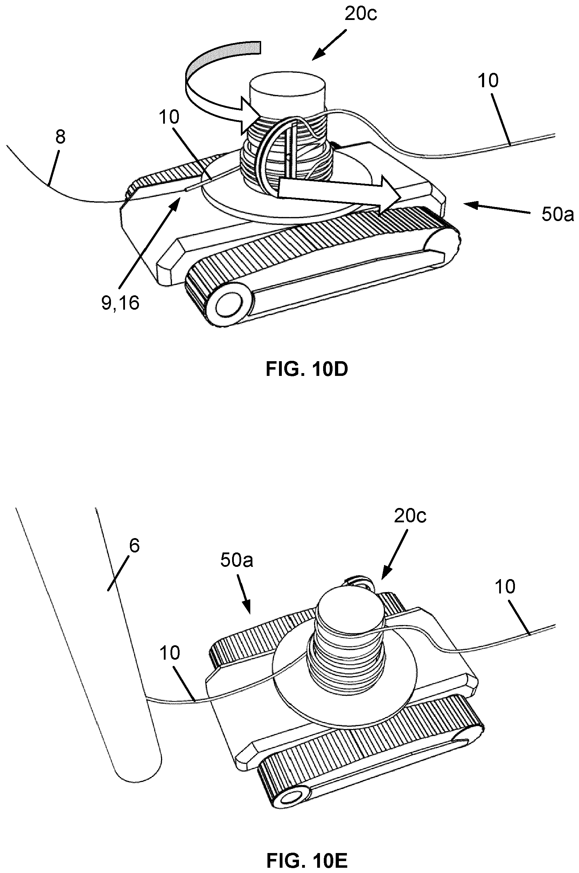

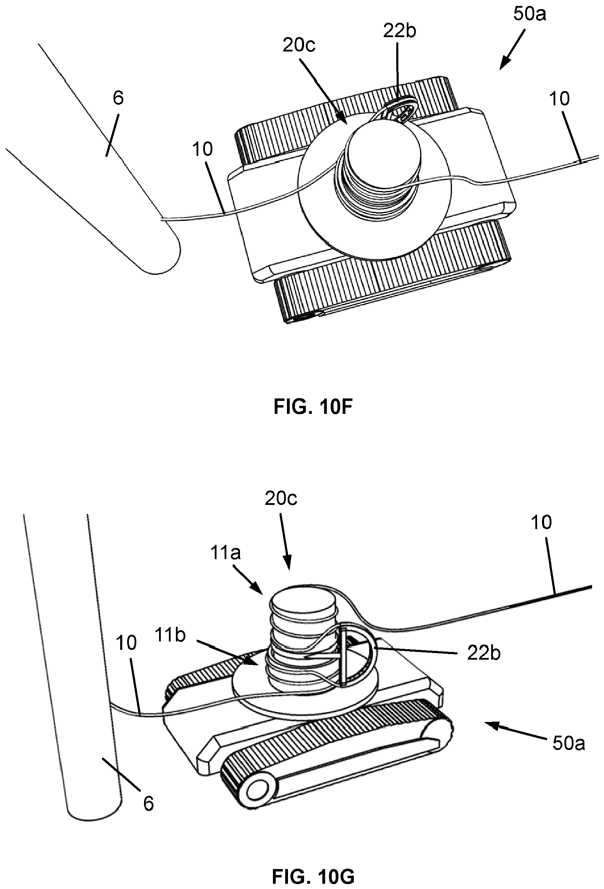

The drum 20c also comprises means 22b for making the line 10 reelable in such a way that a first segment 11a of the line 10 is reeled in a first reeling direction, and a second segment 11b of the line 10 is reeled in a reverse reeling direction. Said means 22b, which in this embodiment are a cable quadrant with a ring support arrangeable on the first cylindrical body 21a, not only ease the provision of the reversal 12 between the first and second segments 11a, 11b, but as it will be explained in relation to Figures 10A-10H they also play an important role in the installation of the line 10, for which reason the means 22b are provided with means for rotating them.

In this embodiment, the means 22b circumscribe the first cylindrical body 21a (the ring support is around the first cylindrical body 21a), and the means 22b are rotatable around the first cylindrical body 21a. In other embodiments, the means 22b do not circumscribe the first cylindrical body 21a or a part thereof, but rather they are arranged next to the first cylindrical body 21a and around the same rotating axis of the first cylindrical body 21a, in which case the means 22b are rotatable about said rotating axis and independently from the first cylindrical body 21a, and also independently from the annular body or ring 25a (or the second cylindrical body in those embodiments in which such body is provided instead of the annular body or ring 25a).Even though the means 22b, the first cylindrical body 21a, and the ring 25a each can rotate independently from the others, they all rotate about a same rotating axis.

Figure 8 shows a drum 20d in accordance with an embodiment.

The drum 20d comprises a first cylindrical body 21c around which the first segment 11a is reeled, a second cylindrical body 25b around which the second segment 11b is reeled, and means 22b for making the line 10 reelable in both reeling directions. The means 22b are arranged within both the first and second cylindrical bodies 21c, 25b for protecting the reversal of the line 10.

The provision of two different cylindrical bodies 21c, 25b, which furthermore may feature a same diameter or different diameters (in which case the line 10 is paid out at one rate when paid out from one end, and at another rate when paid out from the other end, because for each revolution of the drum more length of the line 10 is unwound from the end corresponding to the segment reeled on a greater diameter), makes the reeling of the line 10 straightforward because the differentiation of the first and second segments 11a, 11b is clearer: the first segment 11a is reeled on one cylindrical body 21c and the second segment 11b is reeled on the other cylindrical body 25b. Further, the second cylindrical body 25b can rotate around said drum 20d independently from the first cylindrical body 21c (as explained above in relation to the annular body or ring 25a of the embodiment of Figures 7A-7B). Also, the means 22b are rotatable independently from the first and second cylindrical bodies 21c, 25b. The means 22b, the first cylindrical body 21c, and the second cylindrical body 25b all rotate about a same rotating axis.

Figure 9 shows an apparatus 50a in accordance with an embodiment.

The apparatus 50a has arranged thereon, in a secure and reliable manner with attaching means, a drum 20c as described with reference to Figures 7A-7B.

Figures 10A-10H show an installation procedure in accordance with an embodiment.

In this example, the apparatus 50a with the drum 20c as represented in Figure 9 installs the line 10 between the first structure (not illustrated) and the second structure 6. As it will be apparent, the apparatus 50a may carry out the same installation procedure with the drum 20d of the embodiment of Figure 8.

After installing the line 10 in the first structure by connecting the first end of the line 10 to the messenger wire of the first structure first, and then to the corresponding cable or socket of the first structure for operation thereof, the apparatus 50a advances in a direction as shown in Figure 10A while rotating the drum 20c so as to pay out part of the first segment 11a. During the installation of part of the first line segment 11a, the end 16 of the second segment 11b is clamped by mechanical, electrical or hydraulic means (not illustrated) to avoid undesirable unreeling of the second segment 11b.

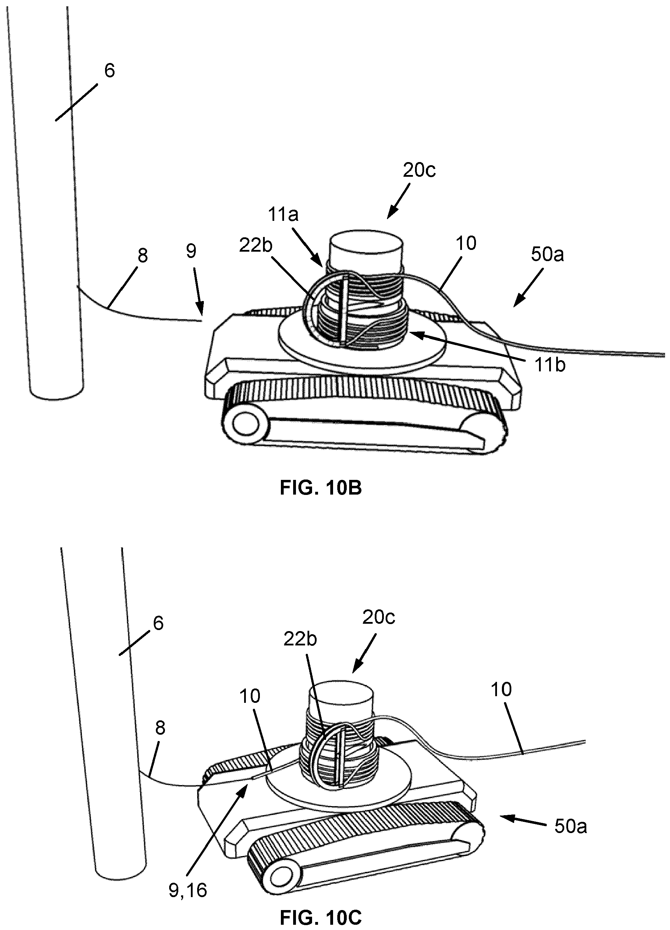

When the apparatus 50a is proximate to the second structure 6, at which point the apparatus 50a has laid hundreds of meters or even kilometers of line 10 from the first structure up to the position proximate to the second structure 6, the second segment 11b is to be paid out for installing the line 10 in the second structure 6. The end 9 of the messenger wire 8 is connected to the second end 16 of the line 10 -said end 16 being comprised in the second segment 11b- as shown in Figures 10B and 10C.

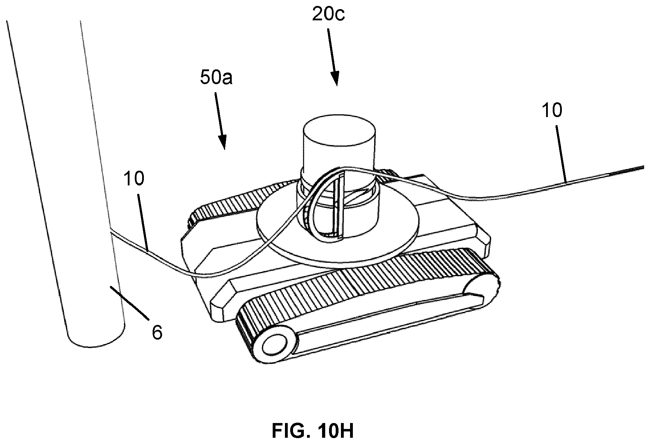

Then, in contrast to the installation process described with reference to Figures 6A-6E, the apparatus 50a does not move, and the installation process is as follows as seen in Figures 10D-10H:
- the messenger wire 8 is pulled from the second structure 6, thereby pulling the second segment 11b and causing it to unreel from the drum 20c, to this end the annular body or ring 25a rotates around the first cylindrical body 21a for unreeling the second segment 11b; and
- the means 22b are rotated at the same time as the messenger wire 8 is pulled for transferring part of the first segment 11a to the second segment 11b, i.e. portion of the line 10 reeled on the first cylindrical body 21a moves and reels on the annular body or ring 25a by passing through the means 22b;
thus, the line 10 is paid out through the second end 16 thereof by progressively transferring the first segment 11a to the second segment 11b. In this way, the pulling of the messenger wire 8 needs only to be synchronized with the rotation of the means 22b so that the line 10 is transferred without losing tension. And as seen in Figure 10H, the line 10 can be completely paid out through the side of the second end 16. The apparatus 50a may be provided with means for manipulating the line so as to be capable of moving from beneath the last portion of the line 10 to be laid as explained above.

In this text, the terms first, second, third, etc. have been used herein to describe several devices, elements or parameters, it will be understood that the devices, elements or parameters should not be limited by these terms since the terms are only used to distinguish one device, element or parameter from another. For example, the first end could as well be named second end, and the second end could be named first end without departing from the scope of this disclosure.

In this text, the term "comprises" and its derivations (such as "comprising", etc.) should not be understood in an excluding sense, that is, these terms should not be interpreted as excluding the possibility that what is described and defined may include further elements, steps, etc.

On the other hand, the invention is obviously not limited to the specific embodiment(s) described herein, but also encompasses any variations that may be considered by any person skilled in the art (for example, as regards the choice of materials, dimensions, components, configuration, etc.), within the general scope of the invention as defined in the claims.

## Claims

1. A method for installing a line (10) between first and second structures (5, 6), comprising:
reeling the line (10) on a drum (20a-20d) of an apparatus (50a, 50b) such that a first segment (11a) of the line (10) is reeled in a first reeling direction, and a second segment (11b) of the line (10) is reeled in a reverse reeling direction, the first segment (11a) comprising a first end (15) of the line (10) and the second segment (11b) comprising a second end (16) of the line (10);
connecting the first end (15) of the reeled line (10) to the first structure (5);
moving the apparatus (50a, 50b) such that it gets closer to the second structure (6), and unreeling part of the first segment (11a) of the reeled line (10) while the apparatus (50a, 50b) moves;
after the step of moving the apparatus (50a, 50b) and unreeling the part of the first segment (11a), connecting a wire (8) from the second structure (6) to the second end (16) of the line (10);
pulling, from the second structure (6), the wire (8) while connected to the second end (16) of the line (10) and simultaneously unreeling at least part of the second segment (11b) of the reeled line (10); and
after the step of pulling the wire (8) and unreeling the at least part of the second segment (11b), disconnecting the second end (16) of the line (10) from the wire (8) and connecting the second end (16) of the line (10) to the second structure (6).

2. The method of claim 1, wherein the drum (20a-20d) comprises means (22a, 22b) for making the line (10) reelable in both the first and the reverse reeling directions.

3. The method of claim 2, wherein the means (22a, 22b) for making the line (10) reelable in both the first and the reverse reeling directions comprise a mechanical device (22a, 22b) adapted to hold the line (10) such that a reversal (12) of the line (10) is supported on the mechanical device (22a, 22b).

4. The method of claim 3, wherein:
the drum (20a-20d) comprises a first cylindrical body (21a, 21b) and either: an annular body (25a) around the first cylindrical body (21a, 21b) and adapted to rotate around the first cylindrical body (21a, 21b), or a second cylindrical body (25b) adapted to rotate about a same rotation axis of the first cylindrical body (21a, 21b);
the drum (20a-20d) further comprises means for rotating the mechanical device (22a, 22b) about a same rotation axis of the first cylindrical body (21a, 21b); and
at least part of the first segment (11a) is reeled on the first cylindrical body (21a, 21b) and at least part of the second segment (11b) is reeled on the annular body (25a) or the second cylindrical body (25b).

5. The method of claim 4, wherein the step of pulling the wire (8) and unreeling the at least part of the second segment (11b) comprises:
pulling, from the second structure (6), the wire (8) while connected to the second end (16) of the line (10) so as to rotate the annular body (25a) or the second cylindrical body (25b) thereby unreeling the at least part of the second segment (11b) of the reeled line (10), and simultaneously rotating the mechanical device (22a, 22b) about the rotation axis for transferring part of the first segment (11a) reeled on the first cylindrical body (21a, 21b) to the annular body (25a) or the second cylindrical body (25b) for unreeling thereof through the second end (16).

6. The method of any one of claims 3-5, wherein the mechanical device (22a, 22b) is: a cable quadrant, or a cable protection device or system for limiting a bending radius of the line (10).

7. The method of any one of claims 1-3, wherein the step of pulling the wire (8) and unreeling the at least part of the second segment (11b) comprises:
pulling, from the second structure (6), the wire (8) while connected to the second end (16) of the line (10), simultaneously unreeling both the at least part of the second segment (11b) of the reeled line (10) and at least part of the first segment (11a) of the reeled line (10), and simultaneously moving the apparatus (50a, 50b) such that it gets closer to the second structure (6).

8. The method of any one of the preceding claims, wherein at least one of the first structure (5) and the second structure (6) is an offshore structure (5, 6), and the line (10) is a submarine line (10).

9. A drum (20a-20d) adapted for attachment to an apparatus (50a, 50b) and further adapted for reeling a line (10) thereon such that a first segment (11a) of the line (10) is reeled or reelable in a first reeling direction, and a second segment (11b) of the line (10) is reeled or reelable in a reverse reeling direction, the first segment (11a) comprising a first end (15) of the line (10) and the second segment (11b) comprising a second end (16) of the line (10), the drum (20a-20d) comprising means (22a, 22b) for making the line (10) reelable in both the first and the reverse reeling directions.

10. The drum (20a-20d) of claim 9, wherein the means (22a, 22b) for making the line (10) reelable in both the first and the reverse reeling directions comprise a mechanical device (22a, 22b) adapted to hold the line (10) such that a reversal (12) of the line (10) is supported on the mechanical device (22a, 22b).

11. The drum (20a-20d) of claim 10, wherein the mechanical device (22a, 22b) is: a cable quadrant, or a cable protection device or system for limiting a bending radius of the line (10).

12. The drum (20a-20d) of any one of claims 9-11, further comprising:
a first cylindrical body (21a, 21b) and either: an annular body (25a) around the first cylindrical body (21a, 21b) and adapted to rotate around the first cylindrical body (21a, 21b), or a second cylindrical body (25b) adapted to rotate about a same rotation axis of the first cylindrical body (21a, 21b); and
means for rotating the mechanical device (22a, 22b) about a same rotation axis of the first cylindrical body (21a, 21b);
wherein at least part of the first segment (11a) is reeled or reelable on the first cylindrical body (21a, 21b) and at least part of the second segment (11b) is reeled or reelable on the annular body (25a) or the second cylindrical body (25b).

13. The drum (20a-20d) of any one of claims 9-12, further comprising the line (10).

14. An apparatus (50a, 50b) comprising:
moving means (52);
a drum (20a-20d) according to any one of claims 9-12; and
a line (10) reeled on the drum (20a-20d) such that a first segment (11a) of the line (10) is reeled in a first reeling direction, and a second segment (11b) of the line (10) is reeled in a reverse reeling direction, the first segment (11a) comprising a first end (15) of the line (10) and the second segment (11b) comprising a second end (16) of the line (10); and
the apparatus (50a, 50b) being configured to unreel the line (10) from both ends (15, 16).

15. The apparatus (50a, 50b) of claim 14, wherein the apparatus (50a, 50b) is configured to unreel the line (10) from both ends (15, 16) by rotating the drum (20a-20d) in a single direction.
